# EUROPÄISCHE PATENTSCHRIFT

(11) **EP 3 067 237 B1**
(45) Veröffentlichungstag und Bekanntmachung des Hinweises auf die Patenterteilung: **29.12.2021**
(21) Anmeldenummer: 16155508.1
(22) Anmeldetag: 12.02.2016
(51) Int. Cl.: G09G 3/20

(54) **ANZEIGEEINRICHTUNG FÜR EIN FAHRZEUG INSBESONDERE NUTZFAHRZEUG**
DISPLAY DEVICE FOR A VEHICLE, IN PARTICULAR A COMMERCIAL VEHICLE
DISPOSITIF D'AFFICHAGE POUR VÉHICULE, NOTAMMENT VÉHICULE UTILITAIRE

(30) Priorität: 06.03.2015 DE 102015002923
(43) Veröffentlichungstag der Anmeldung: 14.09.2016
(73) Patentinhaber: MEKRA LANG GmbH & Co. KG, 91465 Ergersheim (DE)
(72) Erfinder: Lang, Werner, 91465 Ergersheim (DE); Geißendörfer, Peter, 91605 Gallmersgarten (DE)
(74) Vertreter: Kramer Barske Schmidtchen Patentanwälte PartG mbB

(56) Entgegenhaltungen:
- EP-A1- 2 544 162
- EP-A2- 1 897 751
- WO-A1-2014/156788
- JP-A- 2004 173 071
- JP-A- 2008 022 348
- US-A1- 2005 174 429
- US-A1- 2009 102 858

## Beschreibung

### Gebiet der Erfindung

Die Erfindung betrifft eine Anzeigeeinrichtung für ein Fahrzeug, insbesondere ein Nutzfahrzeug, mit Hilfe derer Bilder von der Fahrzeugumgebung in einem Fahrzeuginnenraum, beispielsweise einer Fahrerkabine eines Nutzfahrzeugs, dargestellt werden können, sodass sie durch den Fahrer einsehbar sind. Solche Anzeigeeinrichtungen dienen unter anderem als Spiegelersatzsysteme oder zusätzlich zu den Außenspiegeln eines Fahrzeugs dazu, dem Fahrer die Situation rund um das Fahrzeug in bestimmten Fahrsituationen oder zu jeder Zeit einsehbar und bestmöglich ergonomisch darzustellen, und so dazu beitragen, die Verkehrssicherheit zu verbessern, indem der Fahrer des Fahrzeugs einen guten Überblick über die Verkehrssituation rund um das Fahrzeug und mögliche Gefahren hat.

### Stand der Technik

Spiegelersatzsysteme und andere Kamera-Monitor-Systeme bzw. Anzeigeeinrichtungen für Fahrzeuge sind im Stand der Technik bekannt. Diese beinhalten gewöhnlich eine Aufhahmeeinheit, wie z. B. eine Kamera, mit der zumindest ein Sichtbereich rund um das Fahrzeug erfasst werden kann und Bilddaten von dem Sichtbereich aufgenommen werden können, eine Berechnungseinheit, die die Bilddaten verarbeitet und zur Darstellung auf einer Wiedergabeeinheit, wie beispielsweise einem Monitor oder einer Projektion auf Fahrzeugstrukturbauteile, bereitstellt. Die erfassten Sichtbereiche rund um das Fahrzeug können, insbesondere wenn das System als Spiegelersatzsystem verwendet wird, auch gesetzlich vorgeschriebene Sichtfelder beinhalten, die für den europäischen Raum in der ECE Richtlinie R 46 vorgeschrieben sind.

Dabei ist es unter anderem auch bekannt, Monitore mit sogenannter Splitscreen-Darstellung zu verwenden, bei der mehrere, oftmals verschiedene und gegebenenfalls von verschiedenen Aufnahmeeinheiten erfasste Bilder auf demselben Monitor in unterschiedlichen Bereichen des Monitors dargestellt werden. Die einzelnen Bildbereiche auf dem Monitor sind dabei durch Trennlinien oder Trennbereiche getrennt, die ein- oder verschiedenfarbig sein können und in der Regel ein bis mehrere Pixel breit sind.

In anderen Systemen, die unter anderem auch für sogenannte Fahrerassistenzsysteme verwendet werden, ist es auch bekannt, auf dem Bildbereich Warnrahmen zu überblenden, wenn die Berechnungseinheit durch Bildanalyse in dem aufgenommenem Bild ein Hindernis oder eine Gefahrenstelle erkennt. Somit kann durch das Hervorheben mittels des Warnrahmens der Fahrer vor einer möglichen Gefahr gewarnt werden. Ferner ist es bekannt, auch andere Grafiken, z. B. auch teiltransparente Grafiken, einzublenden.

Bei den im Stand der Technik bekannten Anzeigeeinrichtungen ist es ferner möglich, die Darstellung, beispielsweise in welcher Größe ein Bild von einer bestimmten Aufnahmeeinheit auf der Wiedergabeeinheit wiedergegeben wird, in Abhängigkeit von externen Signalen zu verändern, beispielsweise dem Lenkwinkel oder dem Fahrzustand des Fahrzeugs, wie beispielsweise Vorwärts- oder Rückwärtsfahrt. Beispielsweise ist bei Erfassen eines Lenkwinkels, der nicht der Geradeausfahrt entspricht, bekannt, den Seitenbereich neben dem Fahrzeug vergrößert oder anderweitig hervorgehoben darzustellen.

Bei den bekannten Anzeigeeinrichtungen erfolgt die Ein- oder Überblendung von Trennlinien oder Warnrahmen bzw. Grafiken zwar gegebenenfalls in Abhängigkeit von der Fahrsituation, nicht jedoch in Abhängigkeit von den Bildeigenschaften des an die Trennlinie oder den Rahmen bzw. die Grafik angrenzenden, darzustellenden Bilds. Dies hat zur Folge, dass dann, wenn der Bildinhalt angrenzend an beispielsweise die Trennlinie oder die Überlagerung in den Eigenschaften im Wesentlichen den Eigenschaften der Trennlinie oder der Überlagerung entspricht, diese vom Fahrer nicht mehr erkannt werden können. So ist beispielsweise wenn schwarze Trennlinien verwendet werden, bei nächtlichen aufgenommenen Bildern kaum noch eine Unterscheidung zwischen Bild und Trennlinie möglich.

US 2013/0307985 A1 betrifft ein Fahrerassistenzsystem, bei dem auf ein aufgenommenes Bild deutlich erkennbar Führungslinien überlagert werden können. Das modifizierte Bild wird auf einer Wiedergabeeinheit dargestellt. Dazu erfasst ein Farbattributerfassungsmittel den Farbton oder die Helligkeit des aufgenommenen Bildgebiets, auf dem eine Führungslinie zu überlagern ist. In Abhängigkeit von der Erfassung setzt ein Farbkombinationsmustersetzmittel oder ein Helligkeitssetzmittel eine Farbkombination bzw. Helligkeit der überblendeten Führungslinien fest oder vergleicht Kontrast oder Helligkeit des erfassten Bildgebiets mit den Werten der Führungslinie und setzt, wenn diese ähnlich oder identisch sind, ein verändertes Farbmuster für die Führungslinien zumindest in dem Teil des Bilds fest, in dem der Kontrast bzw. die Helligkeit identisch oder ähnlich sind.

US 2013/0176329 A1 betrifft ein Fahrzeugumgebungsdarstellungssystem, das mit einer Kamera zum Erfassen eines Bildes versehen ist. Eine Verarbeitungseinheit überlagert zweifarbige Rahmen auf das aufgenommene Bild.

JP 2001239882 A betrifft ein Fahrzeugsichtsystem, bei dem verschiedene Bildbereiche zur Darstellung durch eine zweifarbige Linie getrennt sind.

US 2009/0102858 A1 betrifft ein virtuelles Spotlight zur Kennzeichnung von interessierenden Objekten in Bilddaten.

### Aufgabe der Erfindung

Davon ausgehend ist es Aufgabe der Erfindung, eine Anzeigeeinrichtung für ein Fahrzeug, insbesondere für ein Nutzfahrzeug, bereitzustellen, mittels derer unabhängig von den Bildeigenschaften des Bildbereichs verschiedene Bildbereiche deutlich erkennbar abgetrennt dargestellt werden können oder mittels derer Überlagerungen im Bildbereich gut erkennbar sind.

### Darstellung der Erfindung

Diese Aufgabe wird mit einer Anzeigeeinrichtung mit den Merkmalen der Anspruchs 1 gelöst. Bevorzugte Ausführungsformen sind in den abhängigen Ansprüchen angegeben.

Der Erfindung liegt der Gedanke zugrunde, die Eigenschaften eines Einblendbereichs, der beispielsweise eine Trennlinie zwischen mehreren Bildbereichen, ein Rahmen um einen Bildbereich oder ein Überblendbereich im Bildbereich sein kann, in Abhängigkeit von dem aktuell erfassten Bildbereich und dessen aktuellen Eigenschaften bzw. in Abhängigkeit von den Eigenschaften der an den Einblendbereich angrenzenden Bildbereiche anzupassen und zu verändern und die Eigenschaften des Einblendbereichs bzw. der Einblendbereiche entsprechend festzulegen.

Mit Eigenschaften des Einblendbereichs sind dabei alle grafischen Eigenschaften umfasst, die die Einblendung bzw. Überblendung annehmen kann. So kann beispielsweise der Farbton, die Helligkeit, der Kontrast, die Sättigung, die Transparenz oder eine beliebige Kombination dieser Eigenschaften von der Trennlinie bzw. dem Rahmen oder einem anderen Einblendbereich verändert werden.

Dazu ist es vorgesehen, im darzustellenden Bildbereich, der von einer Berechnungseinheit in Abhängigkeit von der Fahrsituation bzw. Fahrzeugfahrtparameter ausgewählt werden kann oder unabhängig von der Fahrsituation und Fahrzeugfahrtparametern ein festgelegter Bildbereich ist, einen Messbereich vorzusehen, innerhalb dessen die Eigenschaften des Bildbereichs erfasst werden durch Bildanalyse im Hinblick auf die grafischen Eigenschaften. Die im Bildbereich erfassten Eigenschaften können wiederum jede beliebige grafische Eigenschaft, wie beispielsweise Farbton, Helligkeit, Kontrast, Sättigung, Transparenz oder beliebige Kombinationen davon sein. Vorzugsweise ist es dabei vorgesehen, dass der Messbereich unmittelbar angrenzend zum gedachten Einblendbereich ist, da dadurch gewährleistet werden kann, dass die Messung im Bildbereich an den Stellen erfolgt, die für das Erkennen des Übergangs zwischen Einblendbereich und Bildbereich relevant sind, so dass ein guter Kontrast zwischen dem Einblendbereich und dem angrenzenden Bildbereich vorgesehen wird.

Dies ermöglicht es, dass beispielsweise bei Dunkelheit, wenn also der Bildbereich im Wesentlichen dunkler als bei Tageslicht ist, die z. B. zuvor dunkleren Trennlinien z. B. heller dargestellt werden können als bei Helligkeit, so dass einerseits nach wie vor eine gute Erkennbarkeit der Trennlinien und damit der unterschiedlichen Bildbereiche gewährleistet ist und andererseits sichergestellt ist, dass der Fahrer nicht unnötig geblendet wird. Gleichzeitig ist es einfach für den Fahrer zu erkennen, ob die Anzeigeeinrichtung und insbesondere deren Wiedergabeeinheit funktionsfähig ist, da unabhängig von einem gegebenenfalls schwarz erscheinenden Bild zumindest der Einblendbereich jederzeit erkannt werden kann.

Bezüglich der Anpassung und Festlegung der Eigenschaften des Einblendbereichs im Hinblick auf die des Bildbereichs ist dabei möglichst eine eindeutige Zuordnung zwischen einer oder mehreren Bildeigenschaften zu einer oder mehreren Einblendbereichseigenschaften vorgesehen. Es kann also z. B. eine Bildeigenschaft im Bildbereich erfasst werden (z. B. Helligkeit) und davon abhängig eine oder mehrere Einblendbereichseigenschaften (z. B. Helligkeit und/oder Sättigung) angepasst werden. Alternativ können mehrere Bildeigenschaften erfasst werden und davon Abhängig in einer Eins-zu-eins-Zuordnung oder in einer Zuordnung mehrerer Bildeigenschaften auf eine Einblendbereichseigenschaften diese festgelegt werden.

Dabei ist es bevorzugt, dass die Eigenschaft des wenigstens einen Bildbereichs mittels einer mathematischen Funktion auf die Eigenschaft des wenigstens einen Einblendbereichs abgebildet wird. Beispielsweise kann eine lineare oder nicht lineare Funktion verwendet werden.

Sind mehrere Bildbereiche vorhanden, so kann für einen zwischen den Bildbereichen liegenden Einblendbereich die mathematische Funktion entweder in Abhängigkeit von einem dominierenden Bildbereich der beiden Bildbereiche oder in Abhängigkeit von beiden Bildbereichen, beispielsweise durch Mittelung oder ähnliches, bestimmt werden. Dies bietet wiederum die Möglichkeit, dass jederzeit, auch bei mehreren Bildbereichen, eine gute Erkennung und Unterscheidung zwischen Bildbereich und Einblendbereich möglich ist.

Ferner ist es möglich, wenn mehrere Einblendbereiche vorgesehen werden, die Eigenschaftsbestimmung des Einblendbereichs für jeden Einblendbereich separat vorzunehmen oder aber eine gemeinsame, wiederum durch Mittelung oder eine mehrdimensionale mathematische Funktion erfolgende Zuordnung vorzunehmen.

Ferner erfolgt die Änderung der Eigenschaften des Einblendbereichs zeitlich verzögert bzw. nur dann, wenn über einen bestimmten Zeitraum eine bestimmte Eigenschaft des Bildbereichs vorhanden ist. Dadurch kann vermieden werden, dass bei einer kurzzeitigen, vorübergehenden Änderung der Eigenschaft des Bildbereichs, beispielsweise bei einer kurzen Verdunkelung, eine rasch aufeinanderfolgende Änderung der Eigenschaften des Einblendbereichs erfolgt, was wiederum den Fahrer verwirren könnte.

Besonders bevorzugt wird die Anzeigeeinrichtung in Verbindung mit mehreren Bildbereichen verwendet. Dabei trennt der Einblendbereich die verschiedenen Bildbereiche z. B. durch einen horizontalen und/oder vertikalen Einblendbereich.

Zusätzlich oder alternativ kann, nach Bedarf der Einblendbereich eine Überblendung, beispielsweise zur Warnung des Fahrers vor einem Hindernis in einem oder mehreren der Bildbereiche beinhalten und/oder es kann ein Rahmen um einen oder mehrere der Bildbereiche als Einblendbereich vorgesehen sein. Die Überblendung kann auch eine graphische und/oder textliche Einblendung einer Menüführung z.B. eines allgemeinen Bordcomputers und/oder eines externen Gerätes sein.

Wenn mehrere Bildbereiche vorgesehen sind, können die verschiedenen darzustellenden Bildbereiche bevorzugterweise in Abhängigkeit von einer Fahrsituation, die durch Fahrparameter des Fahrzeugs beispielsweise in einem zentralen Bordcomputer erfasst werden, verändert werden. So kann in Abhängigkeit von einer Fahrsituation beispielsweise eine Vergrößerung oder Verkleinerung des Einblendbereiches stattfinden und/oder können Einblendbereichseigenschaften wie beispielsweise Farbton, Helligkeit, Kontrast, Sättigung und Transparenz geändert bzw. der Fahrsituation angepasst werden.

Die mehreren Bildbereiche können beispielsweise mittels der Berechnungseinheit aus dem Bild einer einzigen Aufnahmeeinheit, wie beispielsweise einer Kamera, extrahiert werden, oder sie können durch Bilder verschiedener Aufnahmeeinheiten bereitgestellt werden. Die Berechnungseinheit kann dabei weiterhin nach Bedarf innerhalb der aufgenommenen Bilddaten einer jeweiligen Aufnahmeeinheit nur einzelne Bereiche separieren, oder aber den gesamten Aufnahmebereich darstellen.

Bezüglich der Berechnungseinheit ist festzuhalten, dass diese in der Aufnahmeeinheit, wie beispielsweise der Kamera integriert sein kann, in der Wiedergabeeinheit, wie beispielsweise dem Monitor integriert sein kann, als separate Berechnungseinheit vorgesehen sein kann oder aber im Rahmen eines allgemeinen Bordcomputers vorgesehen sein kann. Ferner ist es auch möglich, dass eine Kombination von mehreren Berechnungseinheiten verwendet wird, so dass beispielsweise die Auswahl des darzustellenden Aufnahmebereichs bereits in der Kamera erfolgt, während die Auswahl, welcher der einzelnen Bildbereiche tatsächlich in welcher Größe dargestellt wird und die Modifikation der Einblendbereichseigenschaft und deren Festlegung in einer zentralen Verarbeitungseinheit, beispielsweise einem Bordcomputer, erfolgt, ehe das Bild auf der Wiedergabeeinheit angezeigt wird.

### Kurze Beschreibung der Zeichnungen

Nachfolgend wird die Erfindung beispielhaft anhand der beigefügten Figuren beschrieben, in denen
Fig. 1 eine erste Ausführungsform der Darstellung auf einer Wiedergabeeinheit der Anzeigeeinrichtung zeigt;
Fig. 2 eine weitere Ausführungsform der Darstellung auf der Wiedergabeeinheit der Anzeigeeinrichtung zeigt;
Fig. 3 noch eine weitere Ausführungsform der Darstellung auf der Wiedergabeeinheit der Anzeigeeinrichtung zeigt;
Fig. 4 noch eine weitere Ausführungsform der Darstellung auf der Wiedergabeeinheit der Anzeigeeinrichtung zeigt;
Fig. 5 ein erstes Beispiel für einen mathematischen Zusammenhang zwischen einer im Messbereich gemessenen Bildeigenschaft und der festgelegten Einblendbereichseigenschaft ist;
Fig. 6 ein zweites Beispiel für einen mathematischen Zusammenhang zwischen einer im Messbereich gemessenen Bildbereichseigenschaft und der Einblendbereichseigenschaft ist; und
Fig. 7 schematisch eine Anzeigeeinrichtung für ein Fahrzeug zeigt.

### Beschreibung von bevorzugten Ausführungsformen

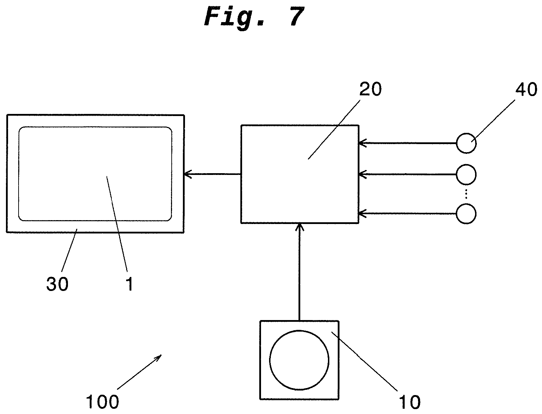

In Fig. 7 ist eine Ausführungsform einer Anzeigeeinrichtung 100 für ein Fahrzeug gezeigt. Die Anzeigeeinrichtung 100 enthält eine Aufnahmeeinheit 10, die beispielsweise eine Kamera oder ein Bildsensor sein kann, eine Berechnungseinheit 20 und eine Wiedergabeeinheit 30. Die Berechnungseinheit 20 kann in die Kamera 10 integriert sein, kann in die Wiedergabeeinheit 30 integriert sein, oder, wie in Fig. 7 dargestellt, als separate Einheit 20, beispielsweise im Rahmen eines Bordcomputers mit einer Verarbeitungseinheit (ECU) vorgesehen sein. Dabei können in die Berechnungseinheit 20 neben den Bilddaten, die von der Aufnahmeeinheit 10 oder den Aufnahmeeinheiten 10 bereitgestellt werden, auch Fahrzeugfahrtparameter von verschiedenen Fahrzeugsensoren 40 zugeführt werden, welche charakteristische Eigenschaften über den Fahrtzustand des Fahrzeugs erfassen, wie beispielsweise die Geschwindigkeit des Fahrzeugs, die Fahrtrichtung, einen Lenkwinkel, das Setzen eines Fahrrichtungsanzeigers und ähnliches.

Ferner ist zu erwähnen, dass mehrere Aufnahmeeinheiten 10 rund um das Fahrzeug vorgesehen werden können, beispielsweise eine Aufnahmeeinheit 10, die den Seitenbereich neben dem Fahrzeug auf einer linken Seite erfasst, eine Aufnahmeeinheit 10, die den Seitenbereich des Fahrzeugs auf einer rechten Seite des Fahrzeugs erfasst, eine Aufnahmeeinheit für den Bereich vor dem Fahrzeug, eine Aufnahmeeinheit für den Bereich hinter dem Fahrzeug und so weiter.

Die Wiedergabeeinheit 30 ist in Form eines Monitors vorgesehen, der beispielsweise in der Fahrerkabine eines Nutzfahrzeugs an einer gut durch den Fahrer einsehbaren Position angebracht ist. Alternativ könnte die Wiedergabeeinheit 30 auch in Form einer Projektionseinrichtung auf ein Fahrzeugstrukturbauteil, ebenfalls gut durch den Fahrer des Fahrzeugs einsehbar, vorgesehen sein.

Die Anzeigeeinrichtung 100 kann dabei insgesamt als Spiegelersatzsystem vorgesehen sein, was bedeutet, dass die gewöhnlicherweise in und um ein Fahrzeug angeordneten Spiegel zur Überwachung des Raums um das Fahrzeug und zum Einsehen von Bereichen um das Fahrzeug, die dem Fahrer nicht durch direkte Sicht einsehbar sind, durch das Kameramonitorsystem bzw. die Anzeigeeinrichtung 100 vollständig ersetzt sind. In diesem Fall ist es essentiell, dass die Darstellung der Sichtbereiche bzw. der gesetzlich vorgeschriebenen Sichtfelder dauerhaft, das heißt nicht durch andere Darstellungen zeitlich unterbrochen, und in Echtzeit erfolgt. Andererseits kann die Anzeigeeinrichtung 100 auch als Ergänzung zu herkömmlichen Spiegeln bzw. herkömmlichen Einrichtungen zur indirekten Sicht dienen. In diesem Fall ist die dauerhafte Darstellung entbehrlich. Vielmehr kann dann nur beim Vorliegen einer bestimmten Fahrsituation eine Anzeige erfolgen.

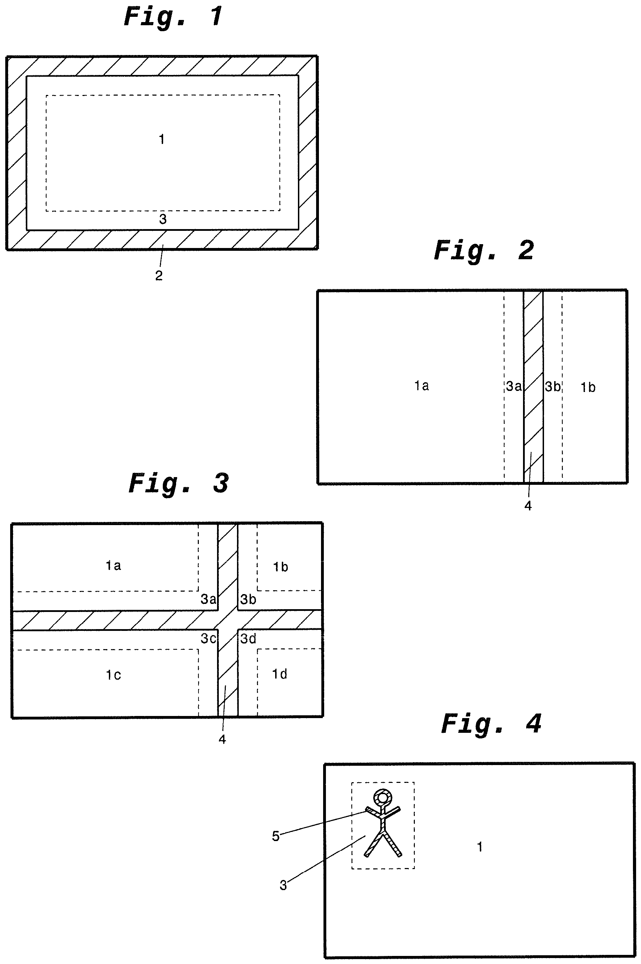

Die von der Aufnahmeeinheit 10 bzw. den Aufnahmeeinheiten 10 erfassten Bilddaten der Fahrzeugumgebung werden an die Berechnungseinheit 20 zur weiteren Verarbeitung gegeben. Dabei kann die Berechnungseinheit 20 beispielsweise anhand der durch die Fahrzeugsensoren 40 erfassten Daten einen Fahrzustand des Fahrzeugs bestimmen und in Abhängigkeit von diesem grundsätzlich auf der Wiedergabeeinheit 30 darzustellende Bildbereiche 1, 1a, 1b, 1c, 1d auswählen. Dabei kann ein Bildbereich oder es können mehrere Bildbereiche, die zusammenhängend oder voneinander getrennt sind, durch die Berechnungseinheit 20 ausgewählt werden, z. B. kann beim Erfassen eines Abbiegevorgangs z. B. durch einen Lenkwinkelsensor als Fahrzeugsensor 40 ein Bereich im Nahbereich des Fahrzeugs einer der ausgewählten Bildbereiche 1, 1a, 1b, 1c, 1d sein. Des Weiteren können beispielsweise die in Fig. 2 gezeigten Bildbereiche 1a und 1b den in der ECE Richtlinie R 46 gesetzlich vorgeschriebenen Sichtfeldern II bzw. IV oder den Sichtfeldern V bzw. VI oder einer andern Kombination der gesetzlich vorgeschrieben Sichtfeldern entsprechen.

Ferner ist die Berechnungseinheit 20 angepasst, eine Modifikation des darzustellenden Bilds dahingehend vorzunehmen, dass ein Einblendbereich 2, 4, 5 (siehe Figs. 1 bis 4) in bzw. angrenzend zu dem Bildbereich 1, 1a, 1b, 1c, 1d ein- oder überblendet wird. Bei der in Fig. 1 dargestellten Ausführungsform ist der Einblendbereich 2, der in den Bildbereich 1 eingeblendet wird, ein Rahmen um den Bildbereich 1. Bei der in Fig. 2 dargestellten Ausführungsform ist der Einblendbereich 4 eine Trennlinie zwischen zwei Bildbereichen 1a, 1b. Bei der in Fig. 3 dargestellten Ausführungsform ist der Einblendbereich 4 eine Kombination zweier Trennlinien, einer horizontalen Trennlinie und einer vertikalen Trennlinie, zwischen insgesamt vier Bildbereichen 1a, 1b, 1c und 1d. Bei der in Fig. 4 dargestellten Ausführungsform ist schließlich der Einblendbereich 5 eine grafische Gestaltung, hier eine Figur, die in einem Bildbereich 1 über das darzustellende Bild überlagert wird und beispielsweise dem Fahrer des Fahrzeugs als Warnhinweis auf eine sich in einem Fahrzeugnahbereich befindende Person dient. Auch Kombinationen dieser Einblendbereiche sind möglich, so dass z. B. ein Einblendbereich mit einer grafischen Gestaltung als Warnhinweis zusätzlich zu einem Rahmen als Einblendbereich 2 verwendet wird.

Zumindest eine Eigenschaft des Einblendbereichs 2, 4, 5, wie beispielsweise der Farbton, die Helligkeit, der Kontrast, die Sättigung oder die Transparenz wird in Abhängigkeit von einer entsprechenden Eigenschaft eines sich im Bildbereich 1, 1a, 1b, 1c, 1d befindlichen Messbereichs 3, 3a, 3b, 3c, 3d angepasst und festgelegt. Der Messbereich 3, 3a, 3b, 3c, 3d liegt dabei vorzugsweise unmittelbar angrenzend an den jeweiligen Einblendbereich 2, 4, 5. Dadurch ist es besonders gut möglich, die für die Unterscheidung zwischen Einblendbereich 2, 4, 5 und Bildbereich 1, 1a, 1b, 1c, 1d erforderlichen Eigenschaften des Einblendbereichs 2, 4, 5 festzulegen, so dass der Einblendbereich 2, 4, 5 jederzeit gut erkannt und wahrgenommen werden kann, ohne dass er für den Fahrer störende Eigenschaften annimmt. Weiter von dem Einblendbereich 2, 4, 5 entfernt liegende Bereiche des Bildbereichs 1, 1a, 1b, 1c, 1d sind für die Bestimmung der anzupassenden Einblendbereichseigenschaft weniger relevant, da diese entfernt liegenden Bereiche für die Unterscheidung zwischen Einblendbereich 2, 4, 5 und Bildbereich 1, 1a, 1b, 1c, 1d nicht ausschlaggebend sind.

Die durch die Berechnungseinheit 20 im Messbereich 3, 3a, 3b, 3c, 3d erfasste Eigenschaft kann dabei eine Eigenschaft aus Farbton, Helligkeit, Kontrast und Sättigung sein, oder es können Kombinationen davon verwendet werden. Ferner ist es auch möglich, dass bei mehreren Bildbereichen 1a, 1b, 1c, 1d und entsprechend mehreren Messbereichen 3a, 3b, 3c, 3d, wie in Figs. 2 und 3 dargestellt, die Festlegung der Eigenschaften des Einblendbereichs 4 durch eine Optimierung der in den verschiedenen Messbereichen 3a, 3b, 3c, 3d gemessenen Eigenschaften und entsprechende Zuordnung der Einblendbereichseigenschaft erfolgt.

Auch bei der in Fig. 1 dargestellten Ausführungsform, bei der der Messbereich 3 einen bezüglich des Einblendbereichs 2 weiter innen liegenden Rahmen umfasst, ist es bevorzugt, dass an verschiedenen Punkten die Bildeigenschaften des Bildbereichs im Messbereich bestimmt werden und dann aus Mittelung bzw. Optimierung die Einblendbereichseigenschaft festgelegt wird. Dadurch kann vermieden werden, dass beispielsweise ein einzelner, zufälliger dunkler Punkt dazu führt, die gesamte Einblendbereichseigenschaft 2 einem dunklen Bildbereich 1 anzupassen.

In jedem Fall ist es wesentlich, dass die Einblendbereichseigenschaft in Abhängigkeit von einer erfassten Eigenschaft des Bildbereichs 1, 1a, 1b, 1c, 1d, also einer Bildeigenschaft, bestimmt wird und nicht etwa in Abhängigkeit von außerhalb des darzustellenden Bilds erfassten Parametern, wie beispielsweise der Helligkeit um das Fahrzeug. Dadurch ist es möglich, die Darstellung auf der Wiedergabeeinheit 30 deutlich zu verbessern, da die Einblendbereichseigenschaft bezüglich des tatsächlichen Bilds, also der Bildeigenschaft, angepasst und optimiert ist.

Optimalerweise erfolgt die Festlegung der Einblendbereichseigenschaft in Abhängigkeit von einer mathematisch zugeordneten Bildeigenschaft. Dabei ist es jedoch nicht erforderlich, allerdings möglich, dass die Bildeigenschaft dieselbe ist, wie die Einblendbereichseigenschaft, die festgelegt wird:

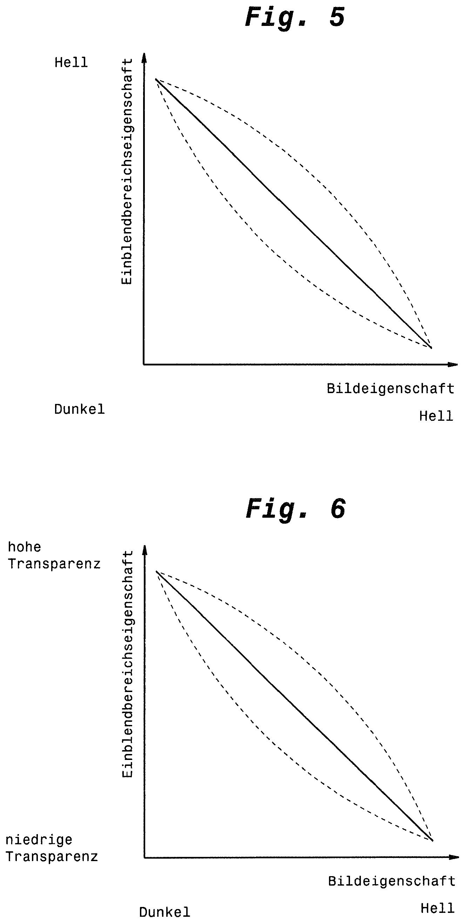

In Fig. 5 ist beispielsweise eine erste mathematische Funktion gezeigt, die die Einblendbereichseigenschaft "Helligkeit" in Abhängigkeit von der Bildeigenschaft "Helligkeit" zeigt. Hier wird also dieselbe Bildeigenschaft und Einblendbereichseigenschaft verwendet. Dies bedeutet, bei einer mathematischen Zuordnung, wie es in Fig. 5 gezeigt ist, wird im Messbereich 3, 3a, 3b, 3c, 3d die Helligkeit des Bildbereichs 1, 1a, 1b, 1c, 1d erfasst und ausgewertet in der Berechnungseinheit 20. In Abhängigkeit von dieser Auswertung wird in der Berechnungseinheit 20 ferner die Einblendbereichseigenschaft "Helligkeit" für den Einblendbereich 2, 4, 5 festgelegt. Wie in Fig. 5 zu erkennen ist, kann die Funktion beispielsweise eine lineare Funktion (durchgezogene Linie in Fig. 5) sein, so dass bei einem hellen Bild im Messbereich 3, 3a, 3b, 3c, 3d ein dunkler Einblendbereich 2, 4, 5 zugeordnet wird und einem dunklen Bildbereich im Messbereich 3, 3a, 3b, 3c, 3d ein heller Einblendbereich 2, 4, 5 zugeordnet wird. Die Funktion, wie in Fig. 5 gezeigt, kann linear sein (durchgezogene Linie in Fig. 5) oder kann nicht linear (gestrichelte Linien in Fig. 5) sein oder jede beliebige andere Funktion, solange sie eine eindeutige Zuordnung von zumindest einer im Messbereich erfassten Bildeigenschaft zu zumindest einer Einblendbereichseigenschaft ermöglicht. Selbstverständlich ist es auch möglich, jeweils in Abhängigkeit von einer bestimmten Bildeigenschaft, wie Helligkeit, Kontrast, Sättigung oder Farbton eine bestimmte entsprechende Einblendbereichseigenschaft zu verändern (Eins-zu-eins-Zuordnung, ggf. mehrfach), wobei beispielsweise gleichzeitig die Helligkeit in Abhängigkeit von der Helligkeit des Bildbereichs 1, 1a, 1b, 1c, 1d und die Sättigung in Abhängigkeit von der Sättigung des Bildbereichs 1, 1a, 1b, 1c, 1d verändert werden können.

Alternativ oder ergänzend ist es auch möglich, einer bestimmten Bildeigenschaft, wie beispielsweise der Helligkeit, eine andere Einblendbereichseigenschaft, wie beispielsweise Transparenz, zuzuordnen. Dies ist in Fig. 6 gezeigt. Dabei ist bei einem erfassten hellen Bild im Messbereich 3, 3a, 3b, 3c eine niedrige Transparenz des Einblendbereichs 2, 4, 5 vorgesehen und bei einem im Messbereich 3, 3a, 3b, 3c, 3d erfassten dunklen Bild eine hohe Transparenz des Einblendbereichs 2, 4, 5 vorgesehen.

Dabei sind beliebige, sinnvolle Kombinationen zwischen der Bildeigenschaft und der Einblendbereichseigenschaft und entsprechende mathematische Zuordnungen möglich. Wie erwähnt ist es auch möglich, dass mehrere Eigenschaften des Einblendbereichs 2, 4, 5 in Abhängigkeit von einer oder mehreren Bildeigenschaften im Messbereich 3, 3a, 3b, 3c, 3d verändert werden.

Sind mehrere Messbereiche 3a, 3b, 3c, 3d, an die ein gemeinsamer Einblendbereich 4 angrenzt, vorgesehen, wie es in Figs. 2 und 3 gezeigt ist, so wird vorzugsweise in jedem der Messbereiche 3a, 3b, 3c, 3d eine Bildeigenschaft bestimmt und in der Berechnungseinheit 20 eine Auswertung vorgenommen, die bezüglich der gesamten erfassten Bildeigenschaften eine optimierte und/oder gemittelte Einblendbereichseigenschaft festlegt.

Nach einer bevorzugten Ausführungsform erfolgt die Änderung der Eigenschaften des Einblendbereichs 2, 4, 5 zeitlich etwas verzögert zu den Änderungen der Eigenschaften des Bildbereichs 1, 1a, 1b, 1c. Vorzugsweise wird erst bei einem fortgesetzten Vorliegen einer bestimmten Eigenschaft des Bildbereichs 1, 1a, 1b, 1c, 1d im Messbereich 3, 3a, 3b, 3c, 3d die Einblendbereichseigenschaft des Einblendbereichs 2, 4, 5 entsprechend angepasst. Dies vermeidet, dass bei einer kurzfristigen, vorübergehenden Änderung der Bildeigenschaft im Messbereich 3, 3a, 3b, 3c, 3d ein als Flackern empfundenes Verändern der Einblendbereichseigenschaft im Einblendbereich 2, 4, 5 erfolgt.

Somit kann mittels der Anzeigeeinrichtung für ein Fahrzeug unabhängig von den aktuellen Bildeigenschaften eine klare Unterscheidbarkeit von verschiedenen Bildbereichen gewährleistet werden. Trennbereiche bzw. Überlagerungsbereiche sind, unabhängig vom aktuellen Bildinhalt, erkennbar, da verhindert wird, dass der Bildbereich und der Einblendbereich die gleichen Eigenschaften annehmen. Zudem ist es möglich, unmittelbar eine defekte Wiedergabeeinheit zu erkennen, da beispielsweise ein defekter Monitor von einem schwarzen Bildinhalt bei Nacht unterschieden werden kann. Wenngleich jederzeit der Bildinhalt durch eine deutliche Kontrastdifferenz zwischen Bild und Einblendbereich erkennbar ist, kann eine Störung des Fahrers durch z. B. eine zu helle Einblendung bei Nacht verhindert werden.

### Bezugszeichenliste

- 1, 1a, 1b, 1c, 1d: Bildbereich
- 2: Einblendbereich
- 3, 3a, 3b, 3c, 3d: Messbereich
- 4, 5: Einblendbereich
- 10: Aufnahmeeinheit
- 20: Berechnungseinheit
- 30: Wiedergabeeinheit
- 40: Fahrzeugparametersensor
- 100: Anzeigeeinrichtung

## Patentansprüche

1. Anzeigeeinrichtung (100) für ein Fahrzeug, mit
einer Aufnahmeeinheit (10) zur Aufnahme von Bilddaten der Fahrzeugumgebung, einer Berechnungseinheit (20), und
einer Wiedergabeeinheit (30) zur Anzeige eines darzustellenden Bilds mit einem Bildbereich (1, 1a, 1b, 1c, 1d),
wobei die Berechnungseinheit (20) angepasst ist, eine Modifikation der von der Aufnahmeeinheit (10) aufgenommenen Bilddaten durchzuführen und die modifizierten Bilddaten zur Darstellung an die Wiedergabeeinheit (30) zu geben,
wobei die Modifikation das Ein- oder Überblenden eines Einblendbereichs (2, 4, 5) in den Bildbereich (1, 1a, 1b, 1c, 1d) des darzustellenden Bilds beinhaltet, wobei der Einblendbereich (2, 4, 5) im oder unmittelbar angrenzend zum Bildbereich (1) liegt, wobei der Bildbereich (1, 1a, 1b, 1c, 1d) weiter einen Messbereich (3, 3a, 3b, 3c, 3d) enthält, in dem eine grafische Bildeigenschaft des Bildbereichs (1, 1a, 1b, 1c, 1d) durch Bildanalyse im Hinblick auf grafische Eigenschaften erfasst wird, und wobei die Berechnungseinheit (20) angepasst ist, eine grafische Einblendbereichseigenschaft in Abhängigkeit von der erfassten grafischen Bildeigenschaft festzulegen, und
wobei die Berechnungseinheit (20) angepasst ist, die Einblendbereichseigenschaft zeitverzögert von der Erfassung der Bildeigenschaft des Bildbereichs festzulegen, wenn über einen bestimmten Zeitraum eine bestimmte Eigenschaft des Bildbereichs vorhanden ist.

2. Anzeigeeinrichtung (100) nach Anspruch 1, wobei der Einblendbereich (2, 4, 5) einen Trennbereich (4) zwischen Bildbereichen (1a, 1b, 1c, 1d) und/oder einen Rahmen (2) um den Bildbereich (1) umfasst.

3. Anzeigeeinrichtung (100) nach Anspruch 1 oder 2, wobei der Einblendbereich (2, 4, 5) einen Überblendbereich (5) umfasst, der den Bildbereich (1) ganz oder zumindest teilweise überlagert.

4. Anzeigeeinrichtung (100) nach einem der vorhergehenden Ansprüche, wobei der Messbereich (3, 3a, 3b, 3c, 3d) im Bildbereich (1, 1a, 1b, 1c, 1d) im oder unmittelbar angrenzend zu dem Einblendbereich (2, 4, 5) liegt.

5. Anzeigeeinrichtung (100) nach einem der vorhergehenden Ansprüche, wobei die erfasste Bildbereichseigenschaft eine Eigenschaft aus Farbton, Helligkeit, Kontrast und Sättigung ist oder eine Kombination dieser Eigenschaften ist.

6. Anzeigeeinrichtung (100) nach einem der vorhergehenden Ansprüche, wobei die festgelegte Einblendbereichseigenschaft eine Eigenschaft aus Farbton, Helligkeit, Kontrast, Sättigung und Transparenz ist oder eine Kombination dieser Eigenschaften ist.

7. Anzeigeeinrichtung (100) nach einem der vorhergehenden Ansprüche, wobei die Berechnungseinheit (20) in der Aufnahmeeinheit (10) und/oder in der Wiedergabeeinheit (30) vorgesehen ist.

8. Anzeigeeinrichtung (100) nach einem der vorhergehenden Ansprüche, wobei weiter eine Verarbeitungseinheit (ECU) vorgesehen ist und die Berechnungseinheit (20) zumindest teilweise in der Verarbeitungseinheit (ECU) vorgesehen ist.

9. Anzeigeeinrichtung (100) nach Anspruch 8, wobei Größe und/oder Position und/oder Art des Einblendbereichs (2, 4, 5) in Abhängigkeit von aktuellen Fahrzeugfahrtparametern verändert werden.

10. Anzeigeeinrichtung (100) nach einem der vorhergehenden Ansprüche, wobei mindestens zwei Bildbereiche (1a, 1b, 1c, 1d) vorgesehen sind, die durch den Einblendbereich (4) voneinander horizontal und/oder vertikal getrennt sind.

11. Anzeigeeinrichtung (100) nach einem der vorhergehenden Ansprüche, wobei die Berechnungseinheit (20) angepasst ist, die Bildeigenschaft des Bildbereichs mittels einer mathematischen Funktion auf die Einblendbereichseigenschaft abzubilden.

## Claims

1. A display system (100) for a vehicle, comprising
a capturing unit (10) for capturing image data of the vehicle environment,
a calculation unit (20), and
a display unit (30) for displaying an image to be displayed with an image portion (1, 1a, 1b, 1c, 1d),
wherein the calculation unit (20) is adapted to carry out a modification of the image data captured by the capturing unit (10) and to supply the modified image data to the display unit (30) for display,
wherein the modification includes overlaying or superimposing an overlay portion (2, 4, 5) on the image portion (1, 1a, 1b, 1c, 1d) of the image to be displayed, the overlay portion (2, 4, 5) being located within or directly adjacent to the image portion (1),
wherein the image portion (1, 1a, 1b, 1c, 1d) further includes a measuring portion (3, 3a, 3b, 3c, 3d) where a graphical image characteristic of the image portion (1, 1a, 1b, 1c, 1d) is acquired through image analysis with regard to graphic characteristic, and wherein the calculation unit (20) is adapted to set a graphical overlay portion characteristic dependent on the acquired graphical image characteristic, and
wherein the calculation unit (20) is adapted to determine the overlay portion characteristic time-delayed with regard to the acquisition of the image characteristic of the image portion, if a certain characteristic of the image portion is present over a certain period of time.

2. The display system (100) according to claim 1, wherein the overlay portion (2, 4, 5) comprises a separating portion (4) between image portions (1a, 1b, 1c, 1d) and/or a frame (2) around the image portion (1).

3. The display system (100) according to claim 1 or 2, wherein the overlay portion (2, 4, 5) comprises a superimposition portion (5) which entirely or at least partly overlaps the image portion (1).

4. The display system (100) according to one of the preceding claims, wherein the measuring portion (3, 3a, 3b, 3c, 3d) is within or directly adjacent to the overlay portion (2, 4, 5) in the image portion (1, 1a, 1b, 1c, 1d).

5. The display system (100) according to one of the preceding claims, wherein the acquired image portion characteristic is a characteristic regarding colour shade, brightness, contrast and saturation, or a combination of these characteristics.

6. The display system (100) according to one of the preceding claims, wherein the determined overlay portion characteristic is a characteristic regarding colour shade, brightness, contrast, saturation and transparency, or a combination of these characteristics.

7. The display system (100) according to one of the preceding claims, wherein the calculation unit (20) is provided in the capturing unit (10) and/or in the display unit (30).

8. The display system (100) according to one of the preceding claims, further comprising a processing unit (ECU) is provided, and wherein the calculation unit (20) is, at least partly, provided in the processing unit (ECU).

9. The display system (100) according to claim 8, wherein size and/or position and/or type of the overlay portion (2, 4, 5) are changed dependent on current vehicle driving parameters.

10. The display system (100) according to one of the preceding claims, wherein at least two image portions (1a, 1b, 1c, 1d) are provided, which image portions are horizontally and/or vertically separated from each other by the overlay portion (4).

11. The display system (100) according to one of the preceding claims, wherein the calculation unit (20) is adapted to map the image characteristic of the image portion to the overlay portion characteristic by means of a mathematical function.

## Revendications

1. Dispositif d'affichage (100) pour un véhicule, avec
une unité d'enregistrement (10) pour l'enregistrement de données d'image de l'environnement du véhicule,
une unité de calcul (20), et
une unité de reproduction (30) pour l'affichage d'une image à représenter avec une zone d'image (1, 1a, 1b, 1c, 1d),
dans lequel l'unité de calcul (20) est adaptée pour effectuer une modification des données d'image enregistrées par l'unité d'enregistrement (10) et fournir les données d'image modifiées pour la représentation au niveau de l'unité de reproduction (30),
dans lequel la modification contient l'entrée en fondu ou l'enchaînement en fondu d'une zone de fondu (2, 4, 5) dans la zone d'image (1, 1a, 1b, 1c, 1d) de l'image à représenter, dans lequel la zone de fondu (2, 4, 5) se trouve dans ou directement à côté de la zone d'image (1), dans lequel la zone d'image (1, 1a, 1b, 1c, 1d) comporte en outre une zone de mesure (3, 3a, 3b, 3c, 3d) dans laquelle une propriété d'image graphique de la zone d'image (1, 1a, 1b, 1c, 1d) est détectée par une analyse d'image en termes de propriétés graphiques, et dans lequel l'unité de calcul (20) est adaptée pour définir une propriété de zone de fondu graphique en fonction de la propriété d'image graphique détectée, et
dans lequel l'unité de calcul (20) est adaptée pour définir la propriété de zone de fondu de manière retardée à partir de la détection de la propriété d'image de la zone d'image lorsqu'une certaine propriété de la zone d'image est présente pendant un certain laps de temps.

2. Dispositif d'affichage (100) selon la revendication 1, dans lequel la zone de fondu (2, 4, 5) comprend une zone de séparation (4) entre des zones d'image (1a, 1b, 1c, 1d) et/ou un cadre (2) autour de la zone d'image (1).

3. Dispositif d'affichage (100) selon la revendication 1 ou 2, dans lequel la zone de fondu (2, 4, 5) comprend une zone de fondu enchaîné (5) qui recouvre totalement ou au moins partiellement la zone d'image (1).

4. Dispositif d'affichage (100) selon l'une quelconque des revendications précédentes, dans lequel la zone de mesure (3, 3a, 3b, 3c, 3d) dans la zone d'image (1, 1a, 1b, 1c, 1d) se trouve dans ou directement à côté de la zone de fondu (2, 4, 5).

5. Dispositif d'affichage (100) selon l'une quelconque des revendications précédentes, dans lequel la propriété de zone d'image détectée est une propriété parmi la teinte, la luminosité, le contraste et la saturation ou une combinaison de ces propriétés.

6. Dispositif d'affichage (100) selon l'une quelconque des revendications précédentes, dans lequel la propriété de zone de fondu définie est une propriété parmi la teinte, la luminosité, le contraste, la saturation et la transparence ou une combinaison de ces propriétés.

7. Dispositif d'affichage (100) selon l'une quelconque des revendications précédentes, dans lequel l'unité de calcul (20) est prévue dans l'unité d'enregistrement (10) et/ou dans l'unité de reproduction (30).

8. Dispositif d'affichage (100) selon l'une quelconque des revendications précédentes, dans lequel une unité de traitement (ECU) est en outre prévue et l'unité de calcul (20) est prévue au moins partiellement dans l'unité de traitement (ECU).

9. Dispositif d'affichage (100) selon la revendication 8, dans lequel la taille et/ou la position et/ou le type de la zone de fondu (2, 4, 5) sont modifiés en fonction de paramètres de parcours de véhicule actuels.

10. Dispositif d'affichage (100) selon l'une quelconque des revendications précédentes, dans lequel sont prévues au moins deux zones d'image (1a, 1b, 1c, 1d) qui sont séparées l'une de l'autre horizontalement et/ou verticalement par la zone de fondu (4).

11. Dispositif d'affichage (100) selon l'une quelconque des revendications précédentes, dans lequel l'unité de calcul (20) est adaptée pour représenter la propriété d'image de la zone d'image sur la propriété de zone de fondu au moyen d'une fonction mathématique.
